(19) Europäisches Patentamt
European Patent Office
Office européen des brevets

(11) Publication number: 0 434 030 A1

(12) EUROPEAN PATENT APPLICATION

(21) Application number: 90124771.8

(51) Int. Cl.5: G01L 11/00

(22) Date of filing: 19.12.90

(30) Priority: 20.12.89 JP 331809/89

(43) Date of publication of application:
26.06.91 Bulletin 91/26

(84) Designated Contracting States:
DE GB

(71) Applicant: SEIKO INSTRUMENTS INC.
31-1, Kameido 6-chome Koto-ku
Tokyo 136(JP)

(72) Inventor: Toshitaka, Fukushima, c/o Seiko Instruments Inc.
31-1, Kameido 6-chome
Koto-ku, Tokyo(JP)

(74) Representative: Fleuchaus, Leo, Dipl.-Ing. et al
Melchiorstrasse 42
W-8000 München 71(DE)

(54) **Pressure detector by use of quartz oscillator.**

(57) A pressure detector of the present invention has two quartz oscillators ($X_1$, $X_2$) which has the same negative secondary coefficient in relation to the temperature characteristics. These quartz oscillators ($X_1$, $X_2$) are disposed under the same temperature and different pressure environment. One of them ($X_1$) is disposed under a standard pressure and the other quartz oscillator ($X_2$) is let to be the measured pressure. The pressure detector detects the difference between resonance frequencies ($f_1$, $f_2$) of the quartz oscillators, calculates the period from the detected difference of the frequency, and calculates the measured pressure from the period. So, the present invention is possible to provide the pressure detector which is small size, low cost, and high resolving power.

FIG. 1

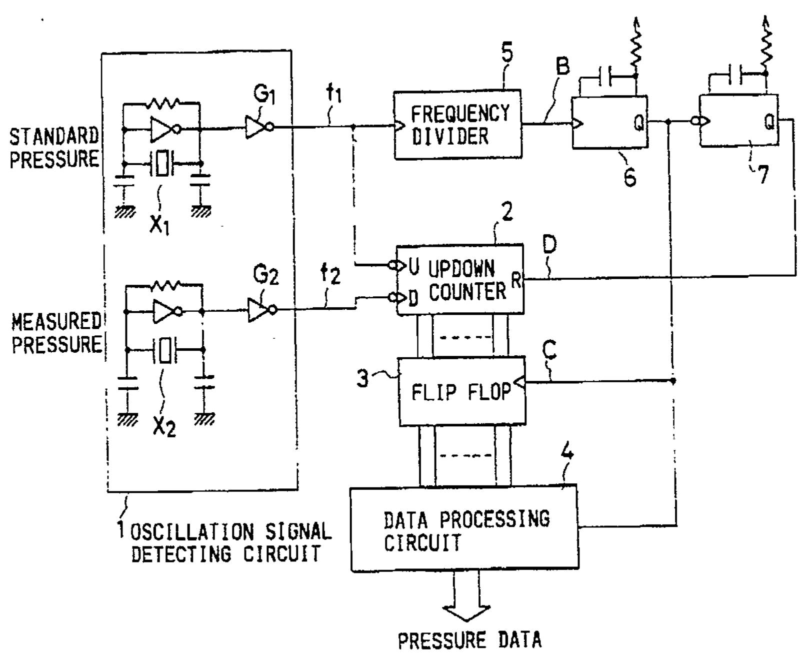


EP 0 434 030 A1

# PRESSURE DETECTOR BY USE OF QUARTZ OSCILLATOR

## BACKGROUND OF THE INVENTION

### 1. Field of the Invention

The present invention relates to a pressure detector used in the domestic electric appliances such as a cleaner and the like, in the medical service field such as a blood pressure meter, in the industrial measuring field such as a pressure meter, a vacuum meter, an altitude meter, etc.

### 2. Description of the Prior Art

Conventionally, as the method for detecting the pressure by utilizing quartz oscillator and the like, there are such ones as those which utilize the change of the resonance frequency and the change of the resonance resistance value (CI value).

Fig. 3 is a diagram for showing the structure of a pressure sensor by use of a conventional quartz oscillator. The measured pressure is added to a quartz oscillator 14 by a diaphragm 11 and the oscillation frequency of the quartz oscillator 14 is changed. The change of the oscillation frequency is taken out via an electrode 12 and a connector 13. This pressure sensor 10 is frequently used under high pressure environment.

Fig. 4 is a diagram for showing the circuit constitution of a conventional pressure detector for detecting the change of the oscillation frequency $f_0$. As the oscillator X can be used the pressure sensor 10 shown in Fig. 3. Also, the quartz oscillator other than the one shown in Fig. 3 can be used. In general, since the quartz oscillator becomes difficult to oscillate when the pressure becomes high, the frequency number decreases. Also, the frequency and the pressure are proportional under a constant temperature. In the case of the high pressure - frequency conversion efficiency such as in the case of detecting a large pressure change or the like, $f_0$ is directly counted. However, in general, since the change of the frequency due to the pressure is small, a standard oscillation circuit 18 having high frequency is separately provisioned as shown in Fig. 4, the oscillation frequency $f_0$ is shaped by a waveform shaping circuit 14 and is frequency divided by a frequency divider 15, and a counter 17 counts the clock $f_1$ of the standard oscillation circuit 18 during the period of the divided frequency. As a result, the change of the oscillation frequency $f_0$ is detected as the change of the period. However, since the change of the pressure is proportional to the change of the oscillation frequency and is not proportional to the change of the count value, the count value is converted by a data processing circuit 4 into pressure data.

Fig. 5 is a diagram showing the circuit constitution of the conventional pressure detector by use of the change of the CI value. In Fig. 6, is shown the equivalent circuit (a) in the vicinity of the resonance point of the quartz oscillator and the resonance current (b). When pressure is applied, $f_0$ becomes low and the resonance current small. In Fig. 5, the quartz oscillator X is always oscillated at its resonance frequency by use of PLL 21. The quartz oscillator X and a resistor 25 arc connected in series, and the output voltage of PLL 21 is divided by the quartz oscillator X and a resistor 25, and the divided voltage is amplified in an amplifying circuit 23. When the pressure applied to the quartz oscillator X becomes high, the CI value increases and the resonance current decreases. Due to such a fact, the voltage dividing ratio of the quartz oscillator X and the resistor 25 changes, and the output of the resistor 25 becomes small. Then, the DC output of the rectifying circuit 24 becomes small. Thus, the pressure-voltage conversion is carried out.

However, in the conventional method and the detector for detecting the pressure, there were such defects as described in the following.

In the method for detecting the oscillation frequency of the quartz oscillator, although the pressure change is proportional to the change of the oscillation frequency, but when the pressure change becomes large, the change of oscillation frequency itself is small, and the resolving power is bad. In order to cover this defect, the mechanical structure for amplifying small pressure change and for adding it to the quartz oscillator is used, or the quartz oscillator itself is made have a peculiar structure and be in a structure which is liable to receive the pressure change. Also, a quartz oscillator having high oscillation frequency has been developed, and in the period measuring method, a high frequency standard clock is adopted other than the quartz oscillator for measuring the pressure. However, this fact invites the complication of mechanism, large size form, and the cost up of the device. When the frequency number becomes high, the electric power consumption also increases. Further, if the quartz oscillator itself is such one as that has not little temperature change, it is unable to be used.

As a large problematic point in the method for detecting the CI value change, there are such ones that the output voltage obtained is not proportional to the pressure, and that it becomes an ANALOG output. Although it will do in the case of reading the value of pressure by that the voltage is connected as it is to a meter or the like, but in the case of carrying out the data treatment, linearity correction must be effected after it has been subjected to AD conversion (analog - digital conversion). Also, in the case when PLL is used, there are such defects as the increase of the consumed electric power, cost up, etc.

SUMMARY OF THE INVENTION

An object of the present invention is to provide a pressure detector which is small size and low cost.

Another object of the present invention is to provide a pressure detector which is possible to carry out the digital processing and high resolving power.

A further object of the present invention is to provide a pressure detector which is possible to measure the pressurizing, pressure reduction, absolute pressure, and pressure difference.

To realize above objects, the pressure detector of the present invention has first quartz oscillator which has the temperature characteristics of a negative secondary coefficient and disposes under the environment of a standard pressure, second quartz oscillator which has the same negative secondary coefficient s the first quartz oscillator and disposes under the environment of a measured pressure, a detecting circuit for detecting the difference between resonance frequencies of the first and second quartz oscillators, a counting circuit for counting a period of the difference between the resonance frequencies, and a data processing circuit for calculating the measured pressure from the counted period.

BRIEF DESCRIPTION OF THE DRAWINGS

Fig. 1 is a diagram for showing an embodiment of the present invention;

Fig. 2 is a timing chart in the circuit shown in Fig. 1;

Fig. 3 is a sectional view of a pressure sensor by use of a conventional quartz oscillator;

Fig. 4 is a diagram for showing the circuit constitution of a conventional pressure sensor for detecting the change of the oscillation frequency $f_0$;

Fig. 5 is a diagram for showing the circuit constitution of a conventional pressure sensor by use of the change of the CI value;

Figs. 6(a) and (b) are a diagram for showing a equivalent circuit and a graph for showing a resonance current in the vicinity of the resonance point of the quartz oscillator;

Fig. 7 is a diagram for showing second embodiment of the present invention;

Fig. 8 is a timing chart in the second embodiment shown in Fig. 7;

Fig. 9 is a diagram for showing third embodiment of the present invention;

Fig. 10 is a graph for showing the temperature characteristics of a watch use quartz oscillator which may be employed by the present invention;

Figs. 11 and 12 are graphs for showing the relationship between the pressure and the oscillation frequency in the watch use quartz oscillator;

Fig. 13 is a graph for showing the relationship between the pressure and the oscillation frequency at the turning point in the watch use quartz oscillator;

Fig. 14 is a graph for showing the relationship between the pressure and the temperature of the turning point in the watch use quartz oscillator;

Figs. 15, 16 and 17 are graphs for showing the relationship between the pressure and the count number in the second embodiment shown in Fig. 7; and

Fig. 18 is a graph for showing the relationship between the count number and the temperature in the second embodiment shown in Fig. 7.

DESCRIPTION OF THE PREFERRED EMBODIMENT

The present invention will now be described with reference to the accompanying drawings representing an embodiment thereof.

Fig. 1 is a diagram for showing an embodiment of the present invention.

An oscillation signal detecting circuit 1 has quartz oscillators $X_1$, $X_2$ which are respectively oscillated at frequencies $f_1$, $f_2$ and invertors $G_1$, $G_2$ for shaping waveforms generated by quartz oscillators $X_1$, $X_2$. The invertors $G_1$, $G_2$ are connected to an up-down counter 2. Then, it is assumed that the quartz oscillator $X_1$ is put under the standard pressure (i.e. vacuum) and the quartz oscillator $X_2$ is put under the measured pressure which is an atmospheric pressure or a pressure higher than the atmospheric pressure. In the case when the pressure of the quartz oscillator $X_2$ is higher than that of the quartz oscillator $X_1$, the oscillation

frequency $f_2$ becomes lower than the oscillation frequency $f_1$.

Of course, it is possible to make the quartz oscillator $X_1$ be in a state other than the vacuum state, and also, to decrease the pressure of the quartz oscillator $X_2$.

The output of the oscillation signal detecting circuit 1 is counted by the up-down counter 2 for a constant time T which is obtained by dividing the standard frequency $f_1$ with a frequency divider 5. The value counted by the up-down counter 2 is converted to the pressure value with a data processing circuit 4, after once having been latched by a flipflop 3.

Fig. 2 is a timing chart in the circuit shown in Fig. 1. An one shot circuit 6 is acted to form a trigger pulse C at the rising of an output signal B of the frequency divider 5. Also, an one shot circuit 7 is acted to form a reset pulse D at the falling of the trigger pulse C. By that the trigger pulse C is rapid than the reset pulse D, the up-down counter 2 is reset by the reset pulse D after taking in the data in the flipflop 3. Since the count value of the up-down counter 2 is proportional to the oscillation frequency $f_2$ of the quartz oscillator $X_2$, it changes linearly in relation to the pressure. However, since the change of the frequency is small in relation to the change of the pressure, it must be used in the use of detecting a comparatively large pressure change, or the constant time T must be taken long.

Fig. 7 is a circuit diagram for showing the second embodiment of the present invention, in which the method for detecting the beat frequency has been used.

The oscillation signal detecting circuit 1 is the same circuit as that shown in Fig. 1. A beat detecting circuit 31 has a D-flipflop 32 and an AND gate $G_3$. Outputs $f_1$, $f_2$ of the oscillation signal detecting circuit 1 is inputted in the D-flipflop 32. The D-flipflop 32 outputs the difference of the oscillation frequencies $f_1$, $f_2$. Since the output of the D-flipflop 32 (beat frequency $_{\Delta}f$) is low frequency, the logical multiplication of the output and the oscillation frequency $f_1$ which is taken by the AND gate $G_3$ is outputted to a counter 33. The counter 32 counts the output of the gate $G_3$ so that the period of the beat frequency is seeked. A data processing circuit processes the output of the counter 33 and outputs pressure data.

Fig. 8 is a timing chart in the circuit shown in Fig. 7.

The signal F of the logical multiplication is outputted for a time when the signal E of beat frequency $_{\Delta}f$ holds "High". At the falling of the signal E, the output of the counter 33 is fetched in the data processing circuit 8.

In the case when the oscillation frequencies of the quartz oscillators $X_1$, $X_2$ are approached, there is the case of generating the jitter in a simple circuit shown in Fig. 7. Fig. 9 is a circuit diagram for showing the third embodiment of the present invention, in which have a jitter preventing circuit. The oscillation signal detecting circuit 35 has flipflops connected to outputs of the invertors $G_1$, $G_2$ and outputs signals having half frequencies of $f_1$ and $f_2$. The beat detecting circuit 34 has three D-flipflops 36, 37, 38 and the AND gate $G_3$. After the signal E of the output Q of the D-flipflop 36 rises up, the signal E is prevented from falling for a certain time by the D-flipflop 37. Further, after the signal E falls down, the signal E is prevented from inverting for a certain while by the D-flipflop 38. Timing pulses A, V are used in order to cancel the inversion prohibition of the D-flipflops.

Although description has been given on the circuit constitution, but next, description will be given on the structure and characteristics of a quartz oscillator used in a watch, and will describe how the characteristics changes by the pressure.

The quartz oscillation is formed by vacuum sealing a tuning fork shaped and small oscillator in a cyllinder type metal case. The quartz oscillation adjusts the oscillation frequency with the vapor deposition of a metal and the trimming. In the watch use, it generally adjusts the oscillation frequency to 32,768Hz. In the pressure measurement of a general gas, the reliability is improved when the one vapor deposited with a non-corrosive metal such as gold is used in such a use.

Fig. 10 is a graph showing the temperature characteristics of the watch use quartz oscillator. It has a negative secondary coefficient in relation to temperature and makes the temperature Ta of the turning point in the range of 20 to 25$^{\circ}$C.

Now, in the oscillation signal detecting circuit 1 shown in Fig. 7, it will be explained how the oscillation frequency changes with the pressure, by use of the watch use quartz oscillator having the temperature characteristics shown in Fig. 10 as the quartz oscillator $X_2$.

Fig. 11 shows the relationship between the pressure and the oscillation frequency. Referring to Fig. 11, the higher the pressure is, the lower the oscillation frequency is. Further, the higher the pressure is, the higher the temperature Ta is.

Fig. 12 shows the change of the oscillation frequency when pressurized from the atmospheric pressure under the constant environmental temperature. It is seen that the oscillation frequency has a linear relationship to the pressure but the gradient differs with the environmental temperature.

Referring to Fig. 13, it is seen that the oscillation frequency at the turning point linearly decreases by the pressure.

Referring to Fig. 14, it is seen that the temperature Ta at the turning point linearly increases by the pressure.

Next, in the oscillation signal detecting circuit 1 shown in Fig. 7, it will be explained the results of measurement, by use of the watch use quartz oscillator having the temperature characteristics shown in Fig. 10 as the quartz oscillators $X_1$, $X_2$.

Fig. 15 is a diagram for showing the change of the count number N under the constant environmental temperature when the quartz oscillator $X_2$ is pressurized from the atmospheric pressure. The count number N itself forms a curve against the pressure.

The ones of Figs. 16 to 18 are the ones which has been obtained by finishing the one shown in Fig. 15.

Fig. 16 shows the change of reverse number of the count number N. Since the count number N is proportional to the period, the reverse number thereof is proportional to the frequency $f_2$. In order to make it be in a suitable scale, the reverse number is multiplied with 20000. Although the pressure and 20000/N seems to be in a Linear relationship, their inclination decreases as the temperature rises up. Further, the reverse number at the atmospheric pressure i.e. when the pressure is not applied decreases as the temperature rises up. In the following, the reverse number at the atmospheric is referred as the offset value.

Fig. 17 shows the change of the inclination of 20000/N. The change of the inclination (sensitivity) is too large, and it can not be used as a pressure sensor.

Referring to Fig. 18, it shows that the temperature and 20000/N are in a linear relationship, when the pressure is constant.

Next, explanation will be given on the correction of the offset and inclination by the temperature, in the case when pressurizing is effected from the atmospheric pressure on the basis of the characteristics shown in Figs. 15 to 18.

At first, the equation representing the relationship between the inverse number of the count value N, the pressure, and the temperature is seeked. Referring to Fig. 16, the following equation is obtained:

$$\frac{1}{N_t} = A_t + B_t P \qquad (1)$$

where,

$N_t$: the count number at temperature t,

At: $1/N_t$ in the non-pressed time at temperature t,

$B_t$: inclination (pressure sensitivity) at temperature t,

p: pressure.

On the other hand, referring to Fig. 18, when it is not pressurized (p = 0mm Hg), 1/Ns and the temperature can be represented in a linear equation as:

$$A_t = A_0 - \alpha t \qquad (2)$$

where,

$A_0$: value at the pressure 0,

$\alpha$: temperature coefficient.

Also, referring to Fig. 17, the pressure sensitivity $B_t$ can be represented as:

$$B_t = B_0 - \beta t \qquad (3)$$

where,

$B_0$: inclination at the temperature 0 °C,

$\beta$: temperature coefficient.

From the equations 1 , 2 , and 3 , it follows:

$$\frac{1}{N_t} = (A_0 - \alpha t) + (B_0 - \beta t) P \quad ④$$

Here, when each count number at the non-pressurized (P = 0mm Hg) in t = $t_0$ and $t_1$ are respectively denoted as $N_{00}$ and $N_{10}$, then we have:

$$\left.\begin{aligned} \frac{1}{N_{00}} &= (A_0 - \alpha t_0) \\ \frac{1}{N_{10}} &= (A_0 - \alpha t_1) \end{aligned}\right\} \quad ⑤$$

where,

$N_{00}$: count value at temperature $t_0$ and P = 0,

$N_{10}$: count value at temperature t, and P = 0.

By solving these equations, we obtain:

$$\left.\begin{aligned} \alpha &= \frac{1}{\Delta t}\left(\frac{1}{N_{00}} - \frac{1}{N_{10}}\right) \\ A_0 &= \frac{1}{\Delta t}\left(\frac{t_1}{N_{00}} - \frac{t_0}{N_{10}}\right) \end{aligned}\right\} \quad ⑥$$

$$\text{But,} \quad \Delta t = t_1 - t_0 \quad ⑦$$

Similarly, when the count values at the pressurized time (P = P,) in t = $t_0$ and $t_1$ are respectively denoted as $N_{01}$ and $N_{11}$, then we have:

$$\left.\begin{aligned} \frac{1}{N_{01}} &= (A_0 - \alpha t_0) + (B_0 - \beta t_0) P_1 \\ \frac{1}{N_{11}} &= (A_0 - \alpha t_1) + (B_0 - \beta t_1) P_1 \end{aligned}\right\} \quad ⑧$$

When the equation⑧ is solved and $A_0$ and are substituted from the equation⑥ , then we have;

$$B_0 = \frac{1}{P_1 \Delta t}\left(\frac{t_1}{N_{01}} - \frac{t_0}{N_{11}} - \frac{t_1}{N_{00}} + \frac{t_0}{N_{10}}\right) \quad ⑨$$

$$\beta = \frac{1}{P_1 \Delta t}\left(\frac{1}{N_{01}} - \frac{1}{N_{11}} - \frac{1}{N_{00}} + \frac{1}{N_{10}}\right) \quad ⑩$$

Therfore, the count number $N_{tp}$ at temperature t and pressure P becomes to be:

$$\frac{1}{N_{tP}} = (A_0 - \alpha t) + (B_0 - \beta t) P \qquad (11)$$

wherein

$$\left.\begin{aligned}
A_0 &= \frac{1}{\Delta t}\left(\frac{t_1}{N_{00}} - \frac{t_0}{N_{10}}\right)\\
\alpha &= \frac{1}{\Delta t}\left(\frac{1}{N_{00}} - \frac{1}{N_{10}}\right)\\
B_0 &= \frac{1}{P_1 \Delta t}\left(\frac{t_1}{N_{01}} - \frac{t_0}{N_{11}} - \frac{t_1}{N_{00}} + \frac{t_0}{N_{10}}\right)\\
\beta &= \frac{1}{P_1 \Delta t}\left(\frac{1}{N_{01}} - \frac{1}{N_{11}} - \frac{1}{N_{00}} - \frac{1}{N_{10}}\right)
\end{aligned}\right\} \qquad (12)$$

When the term of temperature t is extinguished from the equation (11), the count value is related to the pressure P only. Therefore, the pressure is not dependent on the temperature, but can be obtained from the count value. then it is assumed that the count values are obtained at temperature t = t, when the pressure is not added, it is $N_{10}$, and when the pressure $P_3$ is added, it is $N_{11}$, then, we have from equation (11), the following equations:

$$\left.\begin{aligned}
\frac{1}{N_{30}} &= (A_0 - \alpha t_3)\\
\frac{1}{N_{33}} &= (A_0 - \alpha t_3) + (B_0 - \beta t_3) P_3
\end{aligned}\right\} \qquad (13)$$

By solving these equations, we have

$$P_3 = \frac{1}{B_0 - \frac{\beta}{\alpha}\left(A_0 - \frac{1}{N_{30}}\right)} \cdot \left\{\frac{1}{N_{33}} - \frac{1}{N_{30}}\right\} \qquad (14)$$

When $\alpha\beta A_0$ and $B_0$ are substituted in the equation (14) from equation (12), we obtain:

$$P_3 = \left(\frac{N_{30}}{N_{33}} - 1\right) \cdot \frac{P_1 \left(\frac{1}{N_{00}} + \frac{1}{N_{10}}\right)}{\left(\frac{1}{N_{01}} - \frac{1}{N_{11}} - \frac{1}{N_{00}} + \frac{1}{N_{10}}\right) + N_{30} \left(\frac{1}{N_{01}} \cdot \frac{1}{N_{11}} - \frac{1}{N_{00}} \cdot \frac{1}{N_{10}}\right)}$$

From this equation, when the seeked pressure is denoted as P, the count at the time of non-pressurizing as $N_1$, and at the time of pressurizing is $N_1$, we have:

$$P = \left(\frac{N_1}{N_0} - 1\right) \frac{P_1 \left(\frac{1}{N_{00}} + \frac{1}{N_{10}}\right)}{\left(\frac{1}{N_{01}} - \frac{1}{N_{11}} - \frac{1}{N_{00}} + \frac{1}{N_{10}}\right) + N_1 \left(\frac{1}{N_{01}} \cdot \frac{1}{N_{11}} - \frac{1}{N_{00}} \cdot \frac{1}{N_{10}}\right)} \quad (15)$$

where, $P_1$ is the pressure value added in order to calibrate the pressure at the temperature of $t_0$ and $t_1$.

As the method for introducing the equation (16), may be used the fact that the sensitivity of the pressure and the offset value are in a linear relationship, as can be seen from Fig. 16.

As explained above, by effecting measurement previously at different temperature and pressure, and by carrying out calculation on the basis of the values obtained, the pressure can be obtained. Although the explanation has been given on the case where the quartz oscillator $X_1$ is put under vacuum, and the $X_1$ is pressurized from the atmospheric pressure, but they can be used as they are in the measurement of the absolute pressure such as the measurement of the atmospheric pressure, etc. Also. when the quartz oscillator is made be under another pressure, the pressure difference can also be measured.

According to the present invention, since a cheap watch use quartz oscillator can be used as a pressure sensor, the product becomes cheap one in the cost. Further, since the digital processing can be carried out, the resolution is good, and the signal treatment can be simply carried out. Since the quartz oscillator itself has small shape, the device can be miniaturized, and it is possible to put in a wrist watch, and the like. Also, since it does not select the range of the pressure and is possible to measure the pressurizing, pressure reduction, absolute pressure, and pressure difference, its application range is broad.

## Claims

1. A pressure detector comprising:
first oscillation means having a first quartz oscillator which has a temperature characteristics of a negative secondary coefficient and disposes under the environment of a standard pressure, and for generating a standard frequency;
second oscillation means having a second quartz oscillator which has said negative secondary coefficient and disposes under the environment of a measured pressure, and for generating a measured frequency;
means for detecting the difference between said standard frequency and said measured frequency;
means for calculating a period from said difference; and means for calculating said measured pressure from said period.

FIG. 1

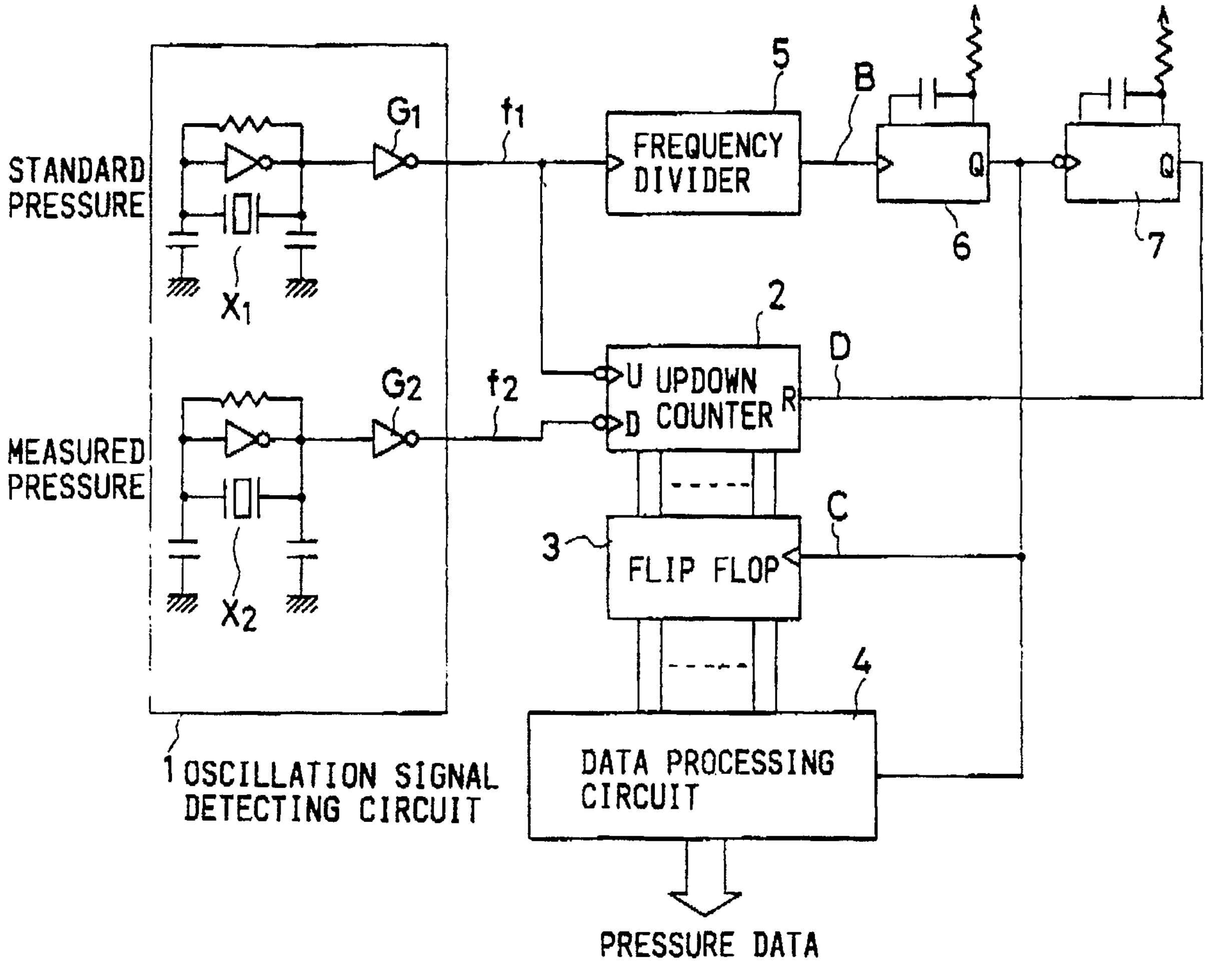
STANDARD PRESSURE
MEASURED PRESSURE
G1
G2
X1
X2
f1
f2
5
FREQUENCY DIVIDER
B
Q
6
7
2
UPDOWN COUNTER
U
D
R
3
FLIP FLOP
C
4
DATA PROCESSING CIRCUIT
PRESSURE DATA
1 OSCILLATION SIGNAL DETECTING CIRCUIT

FIG. 2

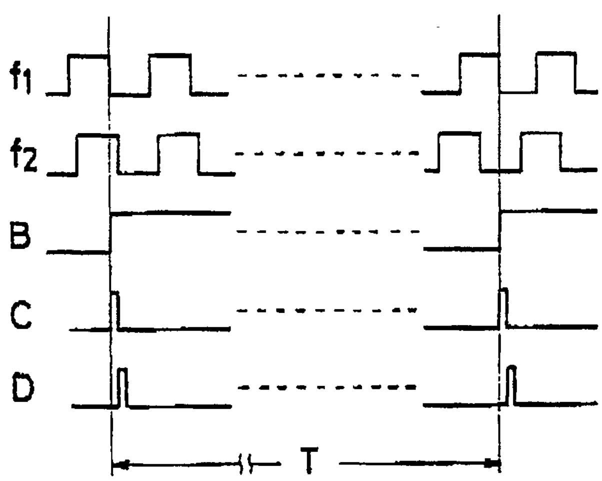
f1
f2
B
C
D
T

FIG. 3 PRIOR ART

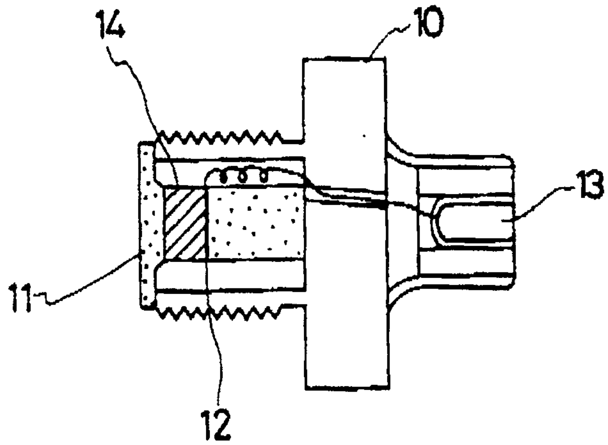


FIG. 4 PRIOR ART

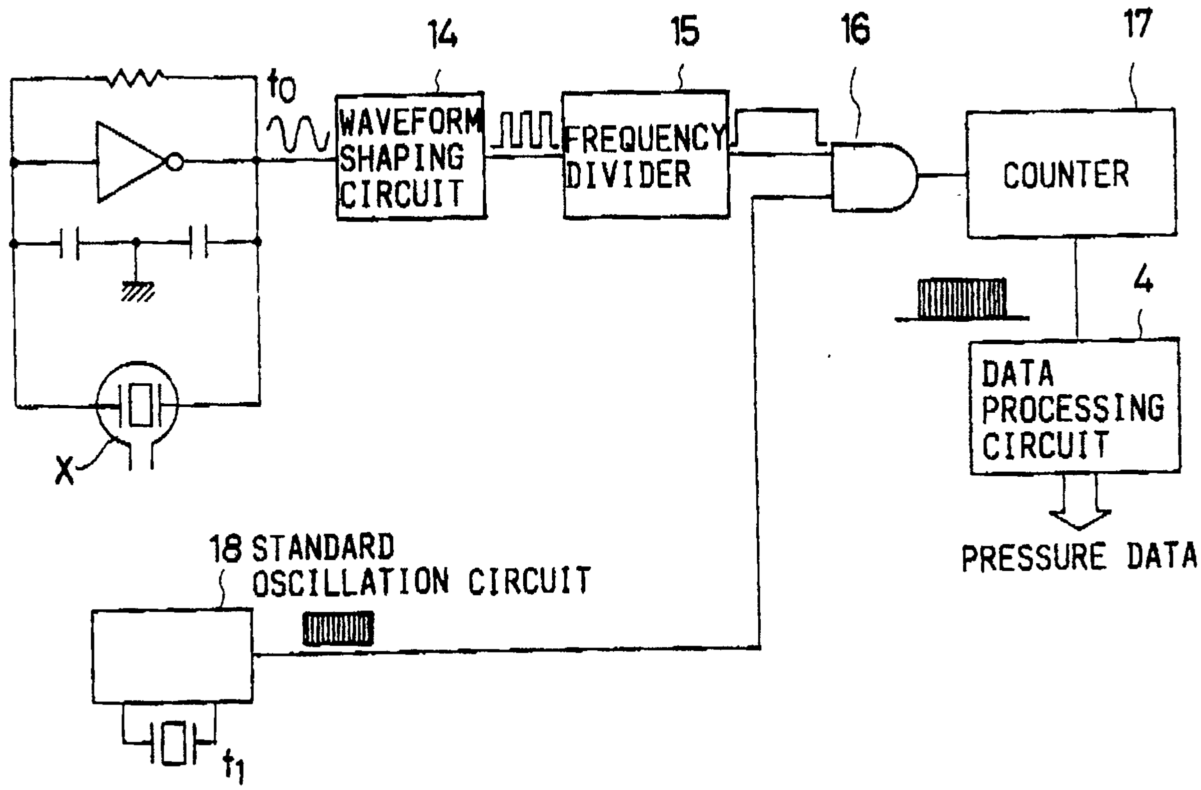

FIG. 5 PRIOR ART

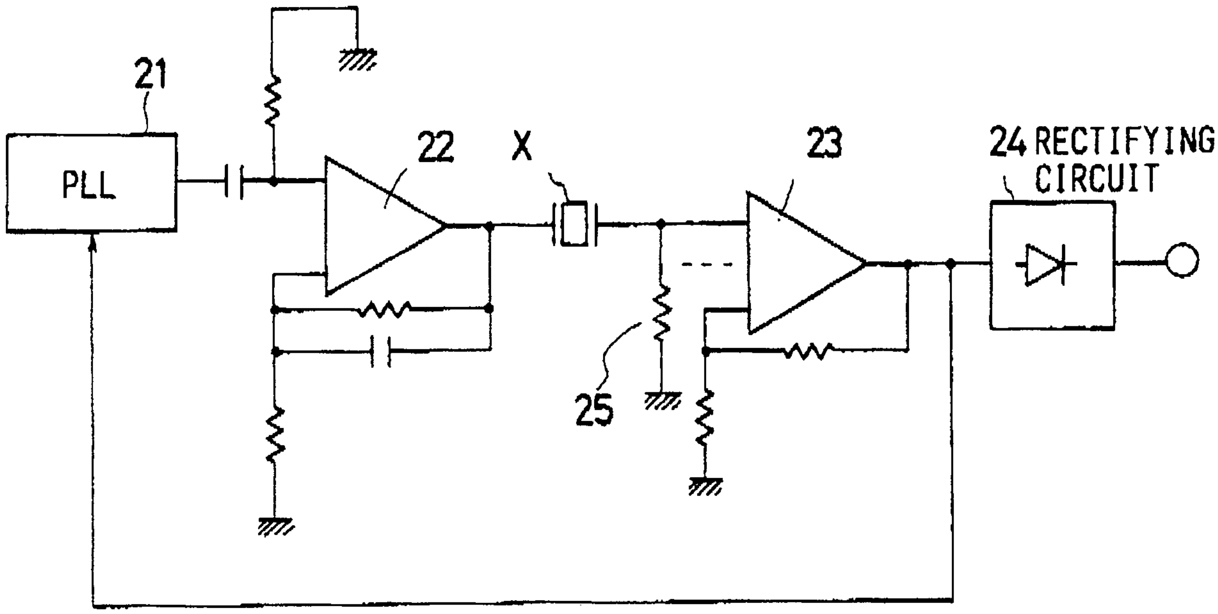


FIG. 6(a)

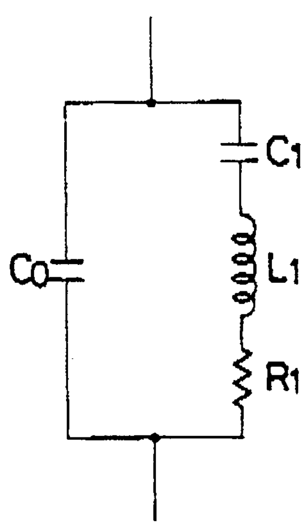


FIG. 6(b)

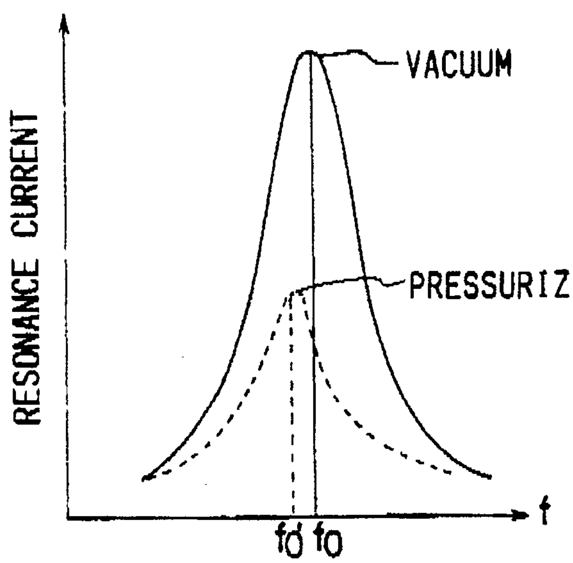

FIG. 7

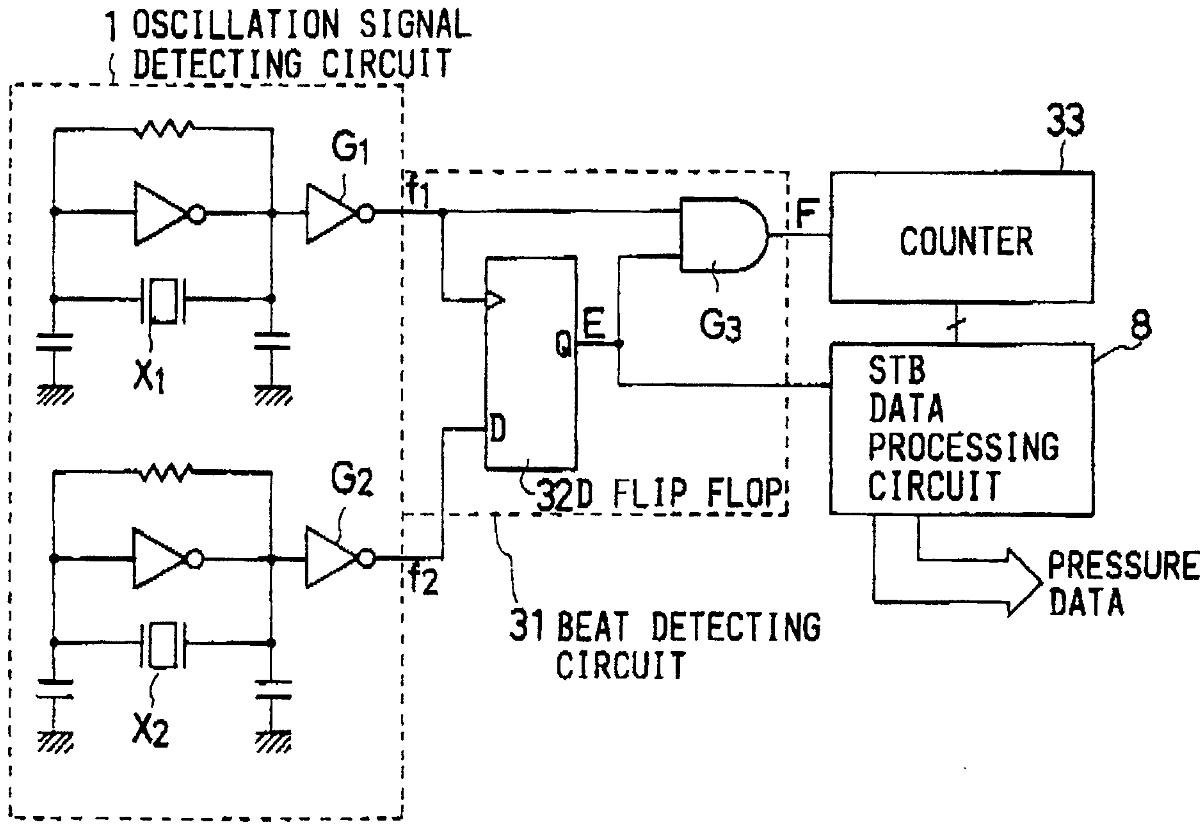
1 OSCILLATION SIGNAL DETECTING CIRCUIT
G1
f1
X1
G2
f2
X2
G3
E
Q
D
F
32 D FLIP FLOP
31 BEAT DETECTING CIRCUIT
33
COUNTER
8
STB
DATA PROCESSING CIRCUIT
PRESSURE DATA

FIG. 8

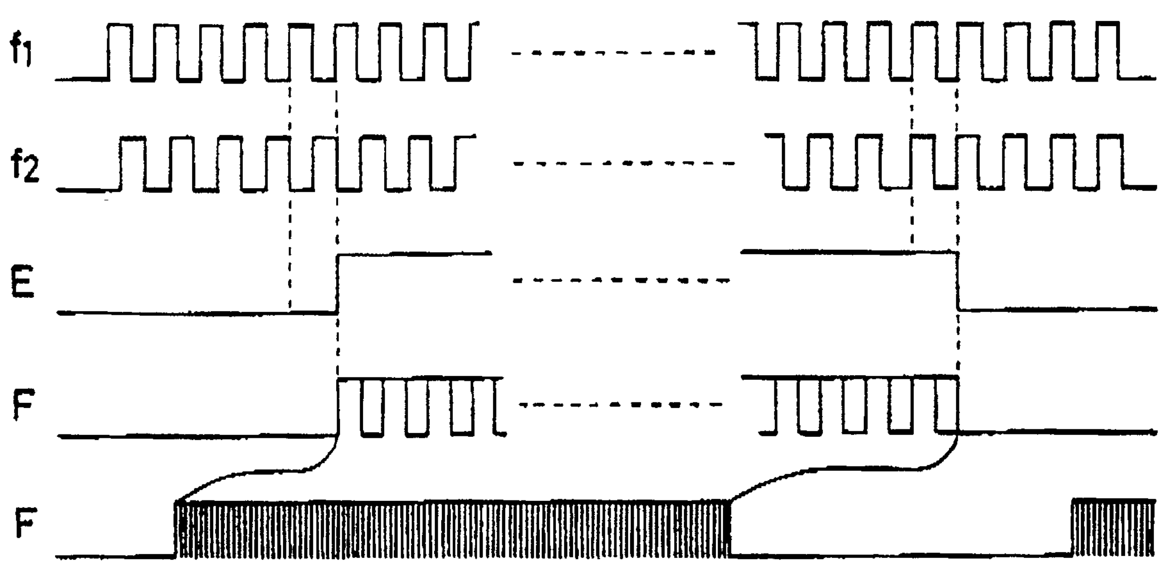
f1
f2
E
F
F

F I G. 9

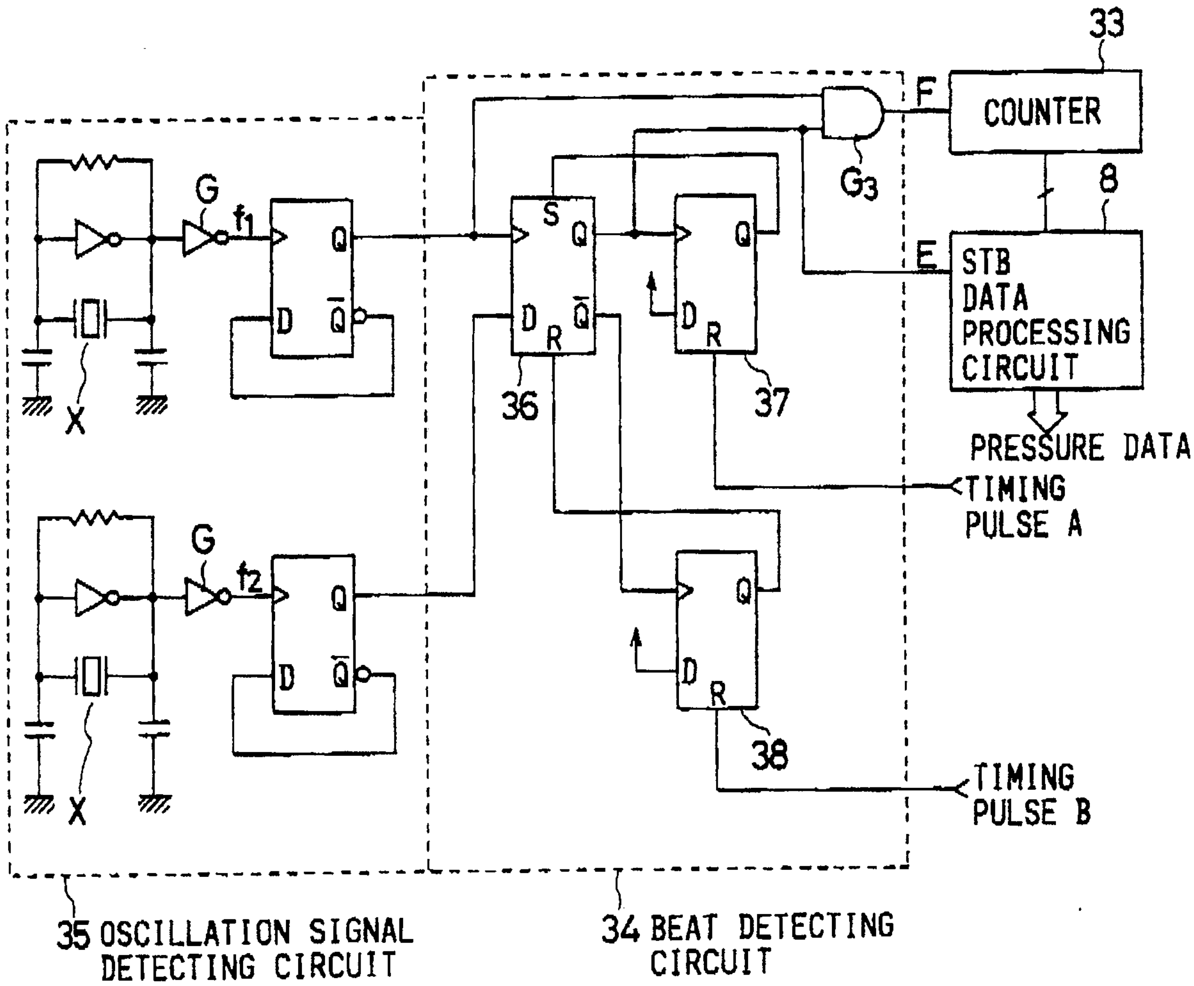
33
COUNTER
F
G3
8
E
STB
DATA
PROCESSING
CIRCUIT
PRESSURE DATA
TIMING
PULSE A
TIMING
PULSE B
G
f1
G
f2
S
Q
D
R
36
37
38
X
X
35 OSCILLATION SIGNAL
DETECTING CIRCUIT
34 BEAT DETECTING
CIRCUIT

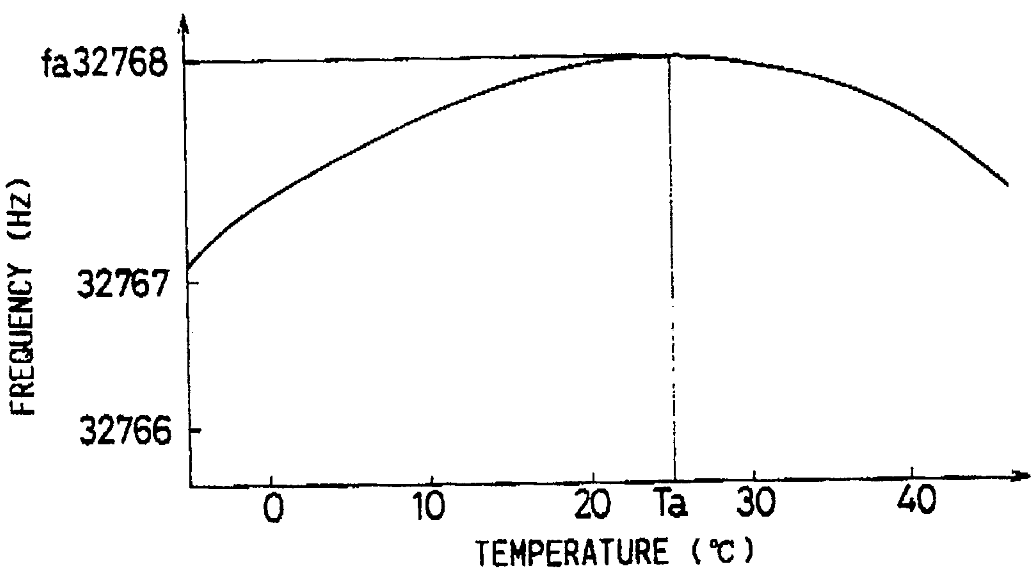
fa32768
32767
32766
FREQUENCY (Hz)
0
10
20
Ta
30
40
TEMPERATURE (℃)

F I G. 10

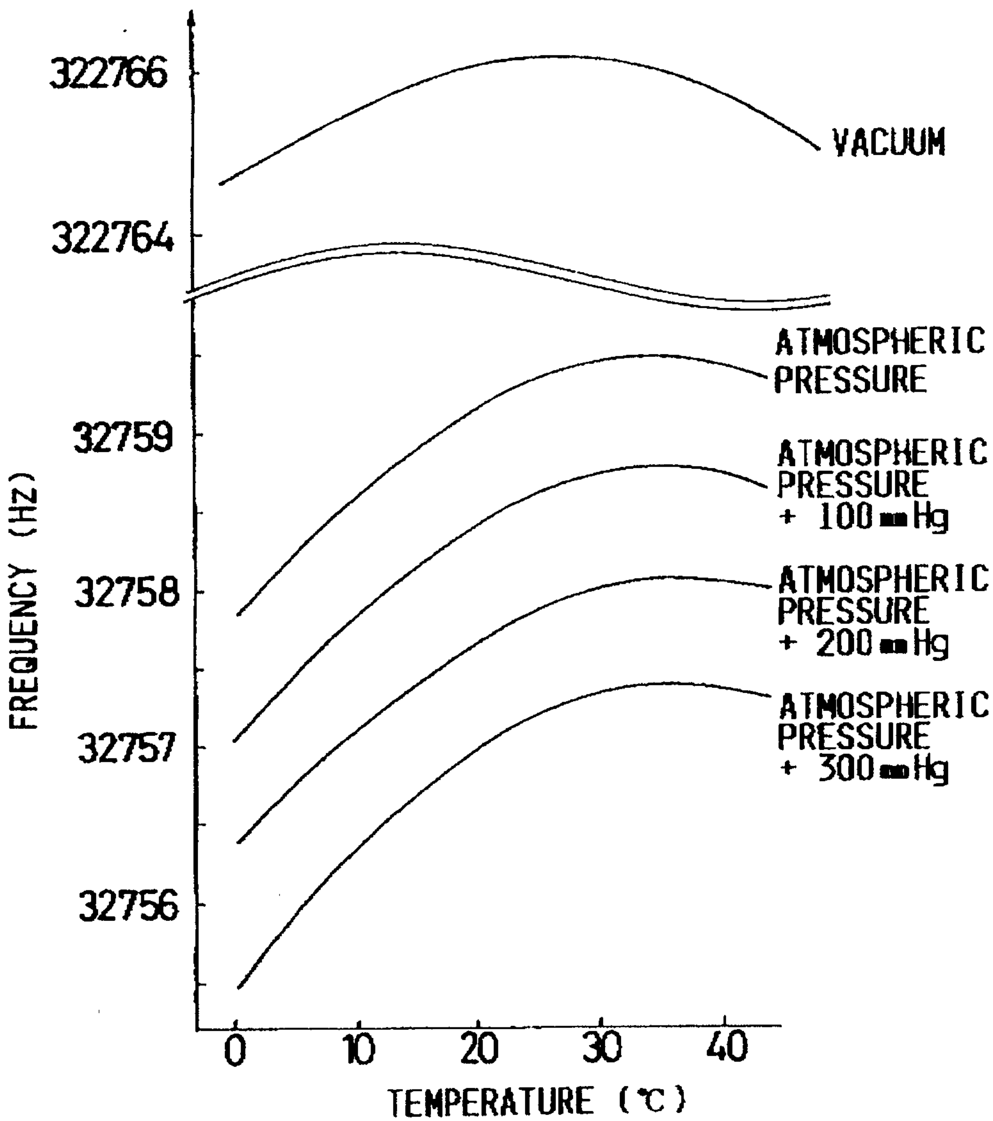
322766
322764
32759
32758
32757
32756
FREQUENCY (HZ)
VACUUM
ATMOSPHERIC PRESSURE
ATMOSPHERIC PRESSURE + 100 mmHg
ATMOSPHERIC PRESSURE + 200 mmHg
ATMOSPHERIC PRESSURE + 300 mmHg
0
10
20
30
40
TEMPERATURE (°C)

FIG. 11

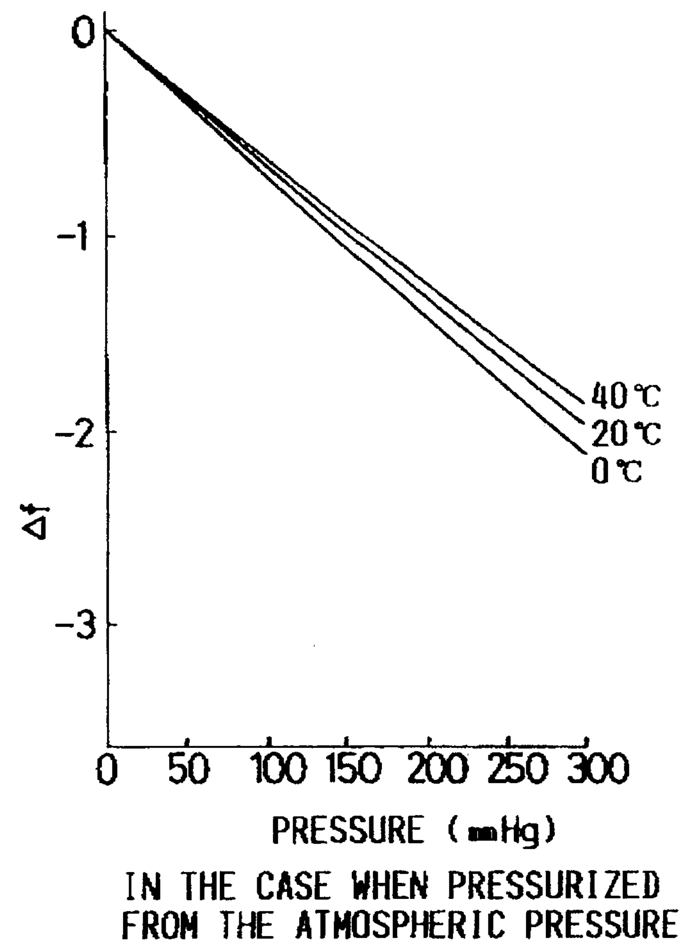
0
−1
−2
−3
Δf
40°C
20°C
0°C
0
50
100
150
200
250
300
PRESSURE (mmHg)
IN THE CASE WHEN PRESSURIZED FROM THE ATMOSPHERIC PRESSURE

FIG. 12

FIG. 13

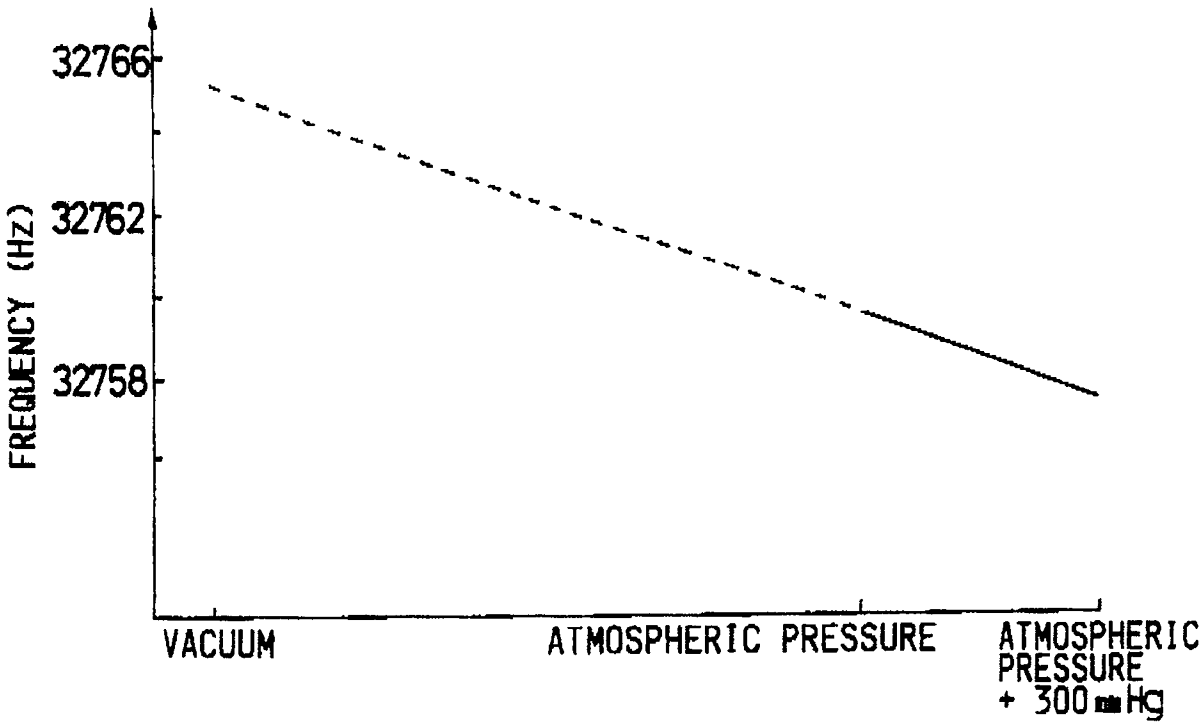
32766
32762
32758
FREQUENCY (Hz)
VACUUM
ATMOSPHERIC PRESSURE
ATMOSPHERIC PRESSURE + 300 mmHg

FIG. 14

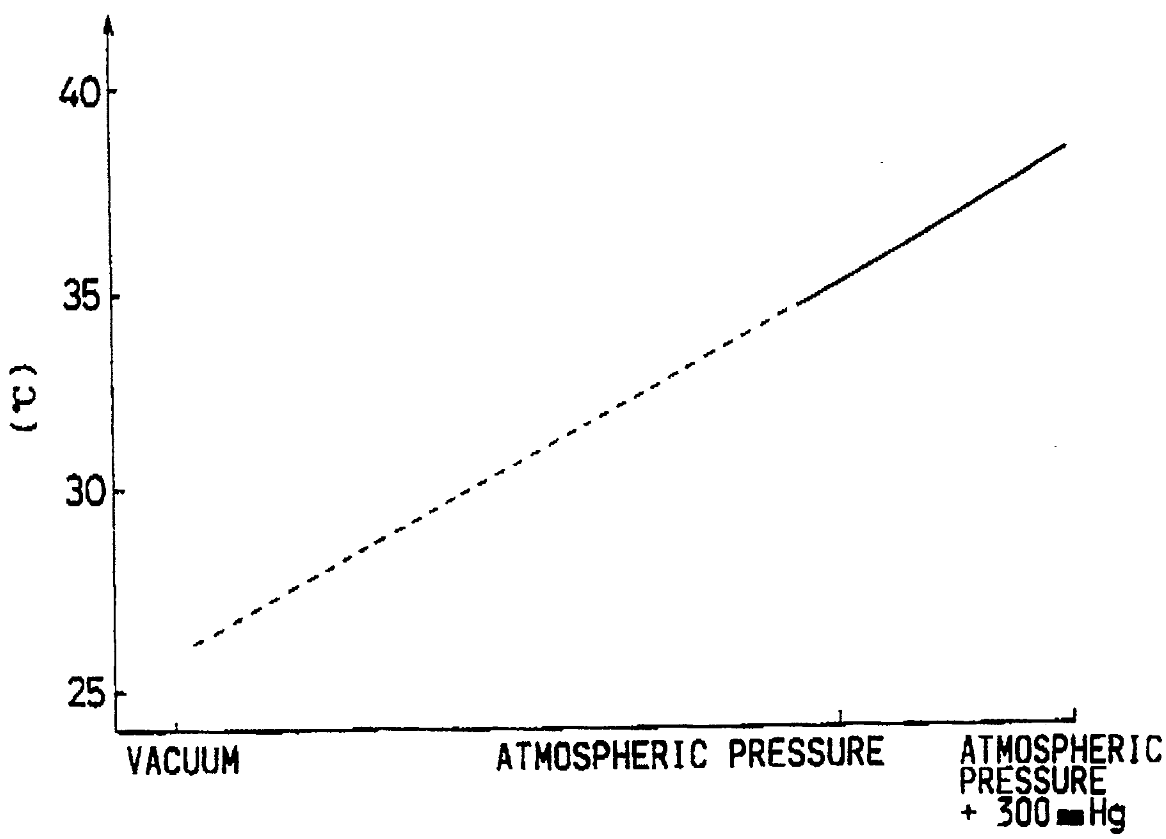
40
35
30
25
(℃)
VACUUM
ATMOSPHERIC PRESSURE
ATMOSPHERIC PRESSURE + 300 mmHg

FIG. 15

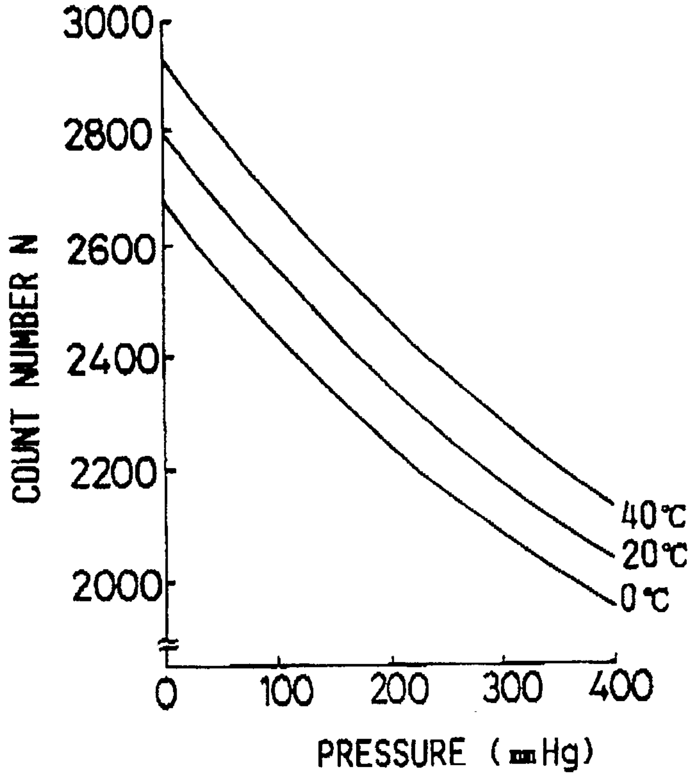
3000
2800
2600
2400
2200
2000
COUNT NUMBER N
40℃
20℃
0℃
0
100
200
300
400
PRESSURE (mmHg)

FIG. 16

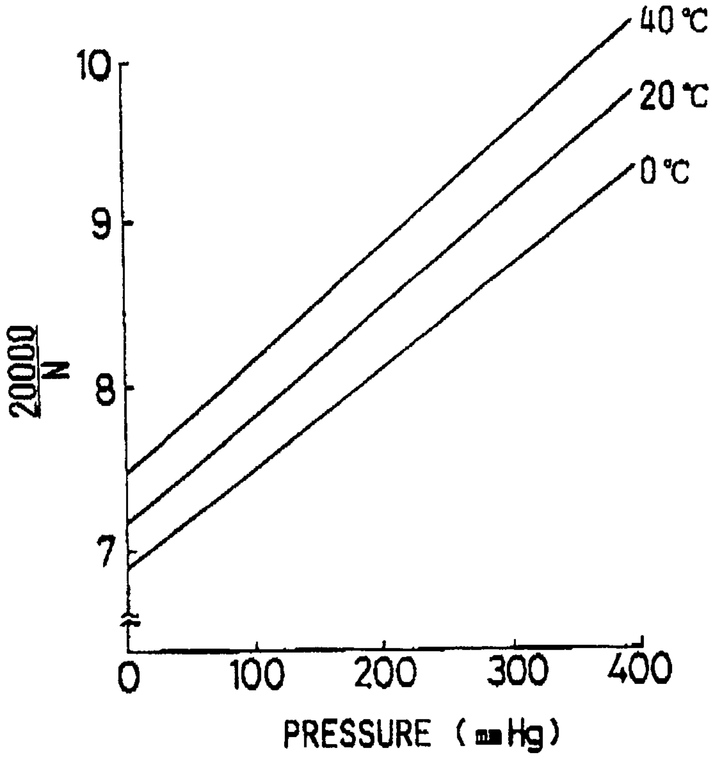
10
9
8
7
20000/N
40℃
20℃
0℃
0
100
200
300
400
PRESSURE (mmHg)

FIG. 17

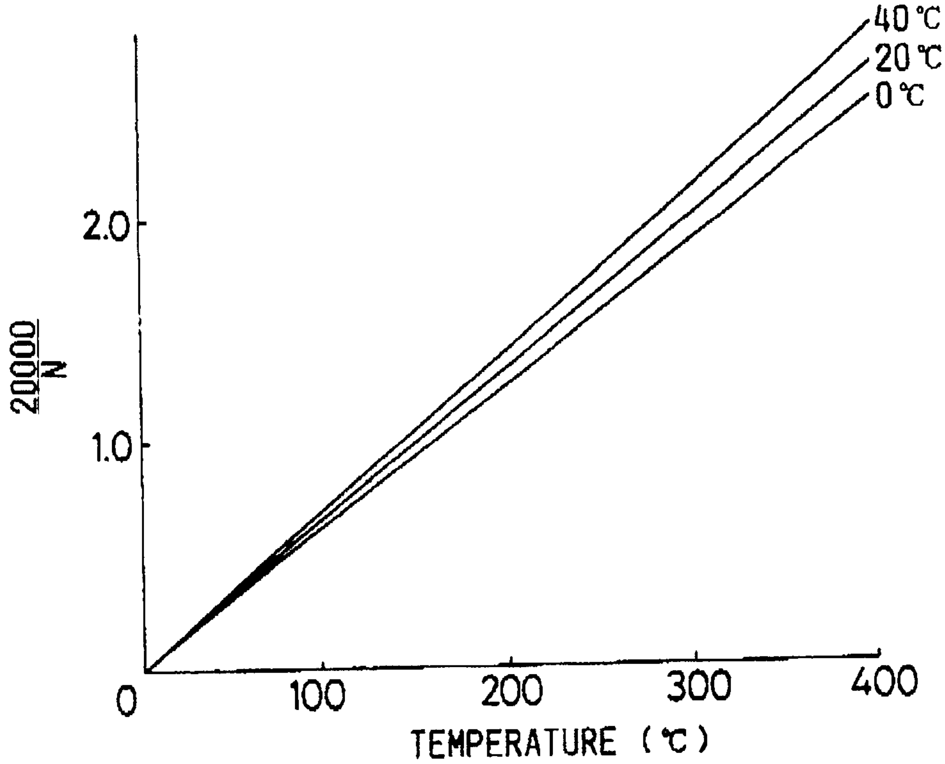
40 ℃
20 ℃
0 ℃
2.0
1.0
20000/N
0
100
200
300
400
TEMPERATURE (℃)

FIG. 18

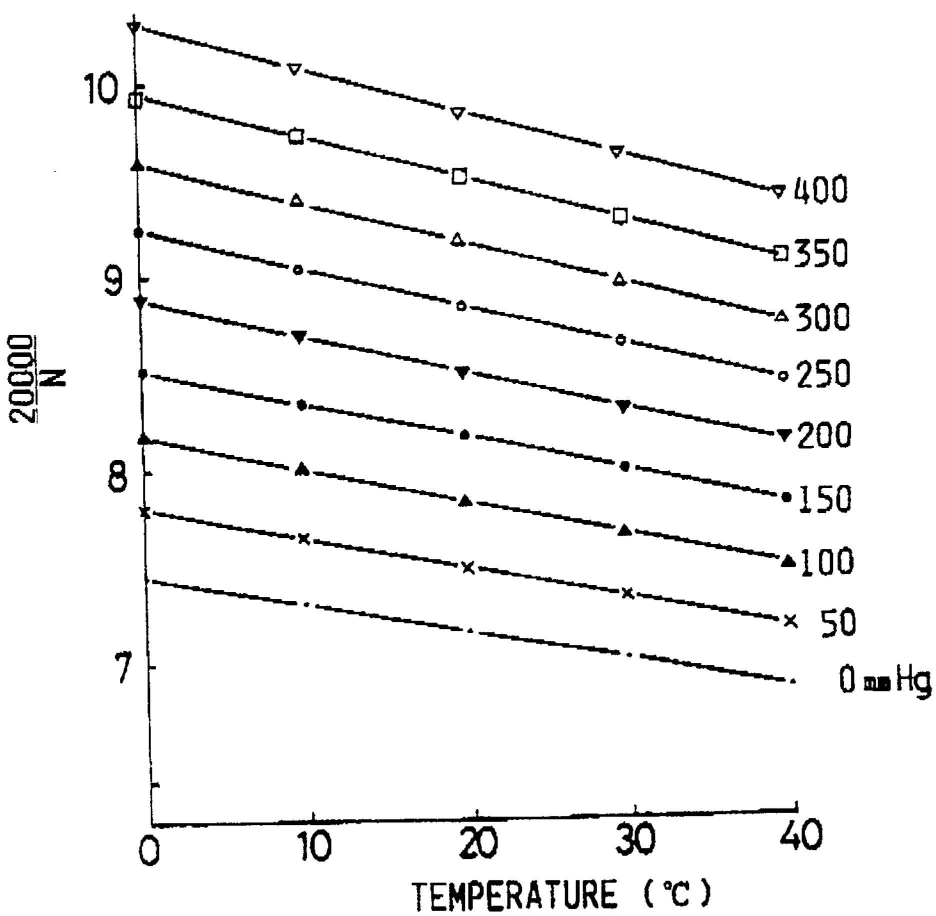
10
9
8
7
20000/N
400
350
300
250
200
150
100
50
0 mmHg
0
10
20
30
40
TEMPERATURE (℃)

European Patent Office

# EUROPEAN SEARCH REPORT

Application Number

EP 90124771.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR - A1 - 2 532 047 (ASULAB) * Abstract; fig. 1-5; page 7, line 12 - page 19, line 24 * -- | 1 | G 01 L 11/00 |
| X | EP - A2 - 0 128 737 (SPERRY) * Abstract; fig. 1; page 5 - page 8, line 5 * -- | 1 | |
| A | EP - A2 - 0 233 054 (SEIKO) * Totality * ---- | 1 | |
| | | | TECHNICAL FIELDS SEARCHED (Int. Cl.5) |
| | | | G 01 L 11/00 |

The present search report has been drawn up for all claims

| Place of search | Date of completion of the search | Examiner |
|---|---|---|
| VIENNA | 19-02-1991 | BURGHARDT |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)